# EUROPEAN PATENT APPLICATION

(11) **EP 4 266 096 A1**
(43) Date of publication of application: **25.10.2023**
(21) Application number: 23168429.1
(22) Date of filing: 18.04.2023
(51) Int. Cl.: G02B 5/30, G03B 21/604, G02B 5/02

(54) **WHITEBOARD FILM SYSTEM, WHITEBOARD SYSTEM, AND PEEKING PREVENTION SYSTEM**

(30) Priority: 18.04.2022 JP 2022068040
(71) Applicant: Nitto Denko Corporation, Ibaraki-shi, Osaka 567-8680 (JP)
(72) Inventor: Toyota, Yuji, Ibaraki-shi, Osaka, 567-8680 (JP); Yaegashi, Masahiro, Ibaraki-shi, Osaka, 567-8680 (JP); Yamamoto, Saori, Ibaraki-shi, Osaka, 567-8680 (JP)
(74) Representative: Hoffmann Eitle

(57) **Abstract**

A whiteboard film system includes: a whiteboard film; a plurality of light-emitting devices to emit infrared light onto a surface of the whiteboard film at a viewer's side; and a plurality of photodetection devices to receive the infrared light emitted from the plurality of light-emitting devices, the plurality of photodetection devices being provided so as to at least partly oppose the plurality of light-emitting devices. A whiteboard film includes: a diffuse reflection layer to diffuse-reflect visible light; an absorptive polarizing layer having a first transmission axis that is parallel to a first direction; and a reflective polarizing layer being disposed between the diffuse reflection layer and the absorptive polarizing layer and having a second transmission axis that is substantially parallel to the first direction.

## Description

### BACKGROUND

### 1. Technical Field:

The present invention relates to a whiteboard film system, a whiteboard system, and a peeking prevention system.

### 2. Description of the Related Art:

The use of open conference rooms that provide a sense of spatial openness is becoming more widespread. For example, the walls (or partitions) of a conference room may be made of glass panels (or acrylic panels) to provide a sense of openness because of their transparency. Oftentimes a whiteboard or a projector screen is installed in a conference room for presentation purposes, for example. While transparency of the walls of the conference room provides a sense of openness, it can be a problem if an outside stranger peeks at the information that is being displayed on a whiteboard or a projector screen in the conference room. Whiteboard films, for use as both a whiteboard and a projector screen, are also known.

The specification of USP No. 10061138 (hereinafter "Patent Document 1") discloses a peeking prevention system that includes a space, an information screen disposed in the space, and a window to delimit the space from the surroundings. The "information screen" displays information by reflecting and/or emitting polarized light that is parallel to a first direction, thereby presenting the displayed information within the space. As an example of the information screen, an information screen that includes a whiteboard and a polarizer attached onto the surface of the whiteboard is described. The window includes a transparent substrate and a polarizer that absorbs light polarized in parallel to the first direction. While allowing the inside of the space to be seen through the transparent window from outside of the space, the information displayed on the information screen can be made invisible.

### SUMMARY

According to a study by the inventors, information which is displayed on the information screen described in Patent Document 1 (specifically an information screen that includes a whiteboard and a polarizer; the same applies hereinafter) may not have sufficient visibility when observed from inside of the space. Specifically, when the information screen described in Patent Document 1 is used as a whiteboard, i.e., when text characters, symbols, drawings, etc., are drawn on the surface of the information screen described in Patent Document 1 with an ink containing a pigment or a dyestuff, the text characters, symbols, drawings, etc., having been drawn may not have sufficient visibility when observed from inside of the space.

The problem associated with the information screen described in Patent Document 1, that is, the displayed information not having sufficient visibility, may also be present when the information screen described in Patent Document 1 is used as a projector screen. When an image is projected by a projector onto the information screen described in Patent Document 1, the projected image may not have sufficient visibility when observed from inside of the space (for example, the projected image may not have a sufficient contrast ratio).

The present invention has been made in view of the above problem, and an objective thereof is to provide a whiteboard film system including a whiteboard film that allows the visibility of displayed information to be improved, a whiteboard system including a whiteboard that allows the visibility of displayed information to be improved, as well as a peeking prevention system that includes such a whiteboard film system or whiteboard system. As used herein, a "whiteboard film (or whiteboard) that allows the visibility of displayed information to be improved" means a whiteboard film (or whiteboard) that provides at least one of: (1) the effect of allowing for improving the visibility of text characters, symbols, drawings, etc., drawn on the surface of a whiteboard film (or whiteboard) with an ink containing a pigment or a dyestuff; or (2) the effect of allowing for improving the visibility of an image projected by a projector onto a whiteboard film (or whiteboard).

According to embodiments of the present invention, means for solution as recited in the following Items are provided.

### [Item 1]

A whiteboard film system comprising:
a whiteboard film including:
   a diffuse reflection layer to diffuse-reflect visible light;
   an absorptive polarizing layer having a first transmission axis that is parallel to a first direction; and
   a reflective polarizing layer being disposed between the diffuse reflection layer and the absorptive polarizing layer and having a second transmission axis that is substantially parallel to the first direction;
a plurality of light-emitting devices to emit infrared light onto a surface of the whiteboard film at a viewer's side; and
a plurality of photodetection devices to receive the infrared light emitted from the plurality of light-emitting devices, the plurality of photodetection devices being provided so as to at least partly oppose the plurality of light-emitting devices.

### [Item 2]

The whiteboard film system of Item 1, further comprising a frame provided in a peripheral region of the surface of the whiteboard film, the frame supporting the plurality of light-emitting devices and the plurality of photodetection devices, wherein
regions of the surface of the whiteboard film other than the peripheral region are exposed from the frame.

### [Item 3]

The whiteboard film system of Item 1 or 2, wherein the whiteboard film further comprises a low-refractive index layer being disposed between the diffuse reflection layer and the reflective polarizing layer and having a refractive index that is smaller than a refractive index of the diffuse reflection layer.

### [Item 4]

The whiteboard film system of Item 3, wherein the refractive index of the low-refractive index layer is 1.30 or less.

### [Item 5]

The whiteboard film system of Item 3 or 4, wherein the low-refractive index layer comprises an air layer.

### [Item 6]

The whiteboard film system of any one of Items 3 to 5, wherein the low-refractive index layer comprises a porous layer.

### [Item 7]

A whiteboard system comprising:
a whiteboard including:
   a diffuse reflection plate to diffuse-reflect visible light;
   an absorptive polarizing layer having a first transmission axis that is parallel to a first direction; and
   a reflective polarizing layer being disposed between the diffuse reflection plate and the absorptive polarizing layer and having a second transmission axis that is substantially parallel to the first direction;
a plurality of light-emitting devices to emit infrared light onto a surface of the whiteboard at a viewer's side; and
a plurality of photodetection devices to receive the infrared light emitted from the plurality of light-emitting devices, the plurality of photodetection devices being provided so as to at least partly oppose the plurality of light-emitting devices.

### [Item 8]

The whiteboard system of Item 7, further comprising a frame provided in a peripheral region of the surface of the whiteboard, the frame supporting the plurality of light-emitting devices and the plurality of photodetection devices, wherein
regions of the surface of the whiteboard other than the peripheral region are exposed from the frame.

### [Item 9]

The whiteboard system of Item 7 or 8, wherein the whiteboard further comprises a low-refractive index layer being disposed between the diffuse reflection plate and the reflective polarizing layer and having a refractive index that is smaller than a refractive index of the diffuse reflection plate.

### [Item 10]

The whiteboard system of Item 9, wherein the refractive index of the low-refractive index layer is 1.30 or less.

### [Item 11]

The whiteboard system of Item 9 or 10, wherein the low-refractive index layer comprises an air layer.

### [Item 12]

The whiteboard system of any one of Items 9 to 11, wherein the low-refractive index layer comprises a porous layer.

### [Item 13]

A peeking prevention system comprising:
the whiteboard film system of any one of Items 1 to 6 or the whiteboard system of any one of Items 7 to 12; and
a partition to delimit from the surroundings a space in which information displayed on the whiteboard film or the whiteboard is presented, the partition having a light-transmitting portion through which the inside of the space is viewable, wherein
the light-transmitting portion includes a transparent substrate and a polarizing layer, the polarizing layer having a third transmission axis that is orthogonal to the first direction.

According to the present invention embodiment, there is provided a whiteboard film system and whiteboard system that allows the visibility of displayed information to be improved, as well as a peeking prevention system that includes such a whiteboard film system or whiteboard system.

### BRIEF DESCRIPTION OF THE DRAWINGS

FIG. **1A** is a schematic cross-sectional view of a whiteboard film **100** according to an embodiment of the present invention.
FIG. **1B** is a schematic cross-sectional view of a whiteboard **100a** according to an embodiment of the present invention.
FIG. **2** is a diagram schematically showing a peeking prevention system **1000** that includes the whiteboard film **100.**
FIG. **3A** is a schematic cross-sectional view of a whiteboard film **101** according to another embodiment of the present invention.
FIG. **3B** is a schematic cross-sectional view of a whiteboard **101a** according to another embodiment of the present invention.
FIG. **4** is a cross-sectional view schematically showing a ray trajectory at an interface between a diffuse reflection layer **40** and a low-refractive index layer **30.**
FIG. **5** is a schematic cross-sectional view showing an example structure of a reflective polarizing layer **10.**
FIG. **6** is a schematic cross-sectional view of a whiteboard film **900** according to Comparative Example.
FIG. **7A** is a diagram schematically showing a whiteboard film system **150** including a whiteboard film **100.**
FIG. **7B** is a diagram schematically showing a whiteboard film system **150** including a whiteboard film **100.**
FIG. **7C** is a diagram schematically showing a whiteboard system **150a** including a whiteboard **101a.**

### DETAILED DESCRIPTION

Hereinafter, a whiteboard film, a whiteboard, and a peeking prevention system according to an embodiment of the present invention will be described. Moreover, a whiteboard film system that includes a whiteboard film according to an embodiment of the present invention, and a whiteboard system that includes a whiteboard according to an embodiment of the present invention, will also be described. Embodiments the present invention are not limited to what will be illustrated hereinbelow.

### A1. whiteboard film, whiteboard, and peeking prevention system

A whiteboard film according to an embodiment of the present invention may be attached onto a base, so as to constitute a whiteboard. The method for attaching the whiteboard film onto the base is not particularly limited; for example, it may be bonded by using an adhesive, or attached by using a magnet. An "adhesive" is inclusive of a tackiness agent (also called "pressure-sensitive adhesive"). The whiteboard film may be fixed on, or removably attached to, the base.

A whiteboard film according to an embodiment of the present invention includes: a diffuse reflection layer to diffuse-reflect visible light; an absorptive polarizing layer having a transmission axis (first transmission axis) that is parallel to a first direction; and a reflective polarizing layer being disposed between the diffuse reflection layer and the absorptive polarizing layer and having a transmission axis (second transmission axis) that is substantially parallel to the first direction. The reflective polarizing layer transmits polarized light that is parallel to its transmission axis, and reflects polarized light that is orthogonal to its transmission axis. When it is said that the transmission axis of the absorptive polarizing layer is substantially parallel to the transmission axis of the reflective polarizing layer, this is meant to encompass the case where the angle made by the transmission axis of the absorptive polarizing layer and the transmission axis of the reflective polarizing layer has a margin of error within ±5° of 0°. The diffuse reflection layer has a diffuse reflectance of preferably 80% or more, and more preferably 90% or more, for example. A specular reflection component in the total reflected light when visible light is incident on the diffuse reflection layer is preferably 50% or less (that is, there is a diffuse reflection component of 50% or more), for example.

A whiteboard according to an embodiment of the present invention differs from a whiteboard film according to an embodiment of the present invention in that the whiteboard includes a diffuse reflection plate, instead of a diffuse reflection layer, to diffuse-reflect visible light. A "diffuse reflection plate" refers to that which requires no supporting base, whereas a "diffuse reflection layer" refers to that which is commonly used in a state of being supported on a base, or that which cannot exist without a supporting base. A diffuse reflection layer and a base supporting the diffuse reflection layer may together be referred to as a diffuse reflection plate. The diffuse reflection layer and the base may monolithically (i.e., without a clear boundary existing between the diffuse reflection layer and the base) compose the diffuse reflection plate. However, this is not to exclude implementations where a diffuse reflection plate is being supported on a base. A whiteboard according to an embodiment of the present invention can be used without being supported on a base. Unless otherwise specified, any description concerning a whiteboard film according to an embodiment of the present invention in the present specification also applies to a whiteboard according to an embodiment of the present invention.

A peeking prevention system according to an embodiment of the present invention includes: the aforementioned whiteboard film or whiteboard; and a partition to delimit from the surroundings a space in which information displayed on the whiteboard film or whiteboard is presented, the partition having a light-transmitting portion through which the inside of the space is viewable. The light-transmitting portion includes: a transparent substrate; and a polarizing layer having a transmission axis (third transmission axis) that is orthogonal to the first direction.

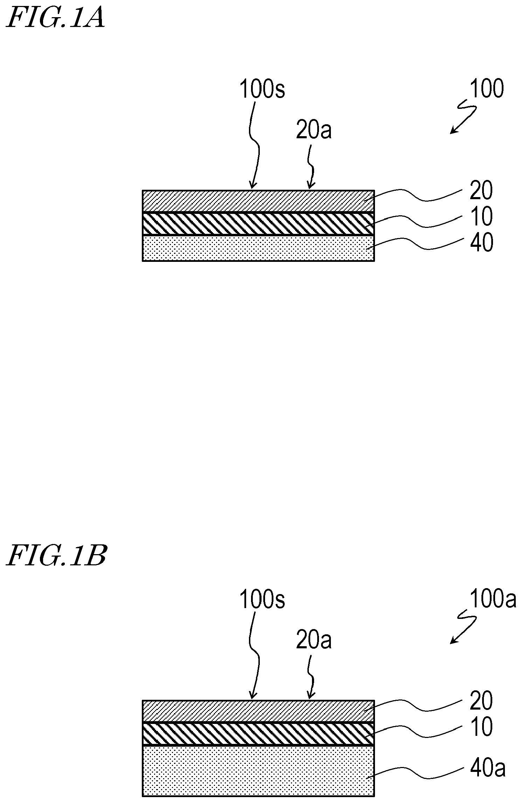

FIG. **1A** shows a schematic cross-sectional view of a whiteboard film **100** according to an embodiment of the present invention. The whiteboard film **100** includes a diffuse reflection layer **40** to diffuse-reflect visible light; an absorptive polarizing layer **20;** and a reflective polarizing layer **10** disposed between the diffuse reflection layer **40** and the absorptive polarizing layer **20.** The first transmission axis of the absorptive polarizing layer **20** and the second transmission axis of the reflective polarizing layer **10** are disposed so as to be substantially parallel. By including the reflective polarizing layer **10** between the diffuse reflection layer **40** and the absorptive polarizing layer **20,** the whiteboard film **100** provides an improved efficiency of light utilization. The whiteboard film **100** allows the visibility of displayed information to be improved.

FIG. **1B** shows a schematic cross-sectional view of a whiteboard **100a** according to an embodiment of the present invention. The whiteboard **100a** includes: a diffuse reflection plate **40a** to diffuse-reflect visible light; an absorptive polarizing layer **20;** and a reflective polarizing layer **10** disposed between the diffuse reflection plate **40a** and the absorptive polarizing layer **20.** The first transmission axis of the absorptive polarizing layer **20** and the second transmission axis of the reflective polarizing layer **10** are disposed so as to be substantially parallel. Although the whiteboard film **100** will be mainly described below, the whiteboard **100a** also attains effects similar to those of the whiteboard film **100.** In other words, the whiteboard **100a** provides an improved efficiency of light utilization because of including the reflective polarizing layer **10** between the diffuse reflection plate **40a** and the absorptive polarizing layer **20.** The whiteboard **100a** allows the visibility of displayed information to be improved.

The whiteboard film **100** is configured so that text characters, symbols, diagrams, etc., can be drawn on its surface **100s** at the viewer's side by using an ink containing a pigment or a dyestuff (typically, a pigment), for example. Herein, the whiteboard film **100** can be used as a whiteboard that allows text characters or the like to be written on or erased from its surface **100s.** For example, a protection layer (e.g., glass) may further be provided on a surface **20a** of the absorptive polarizing layer **20.** Alternatively, on the surface **20a** of the absorptive polarizing layer **20,** an anti-soiling layer made of a fluorine-containing resin or a silicone-containing resin may further be provided. By using an ink that is appropriately adjusted with a solvent, a resin, a release agent, or the like, text characters or the like drawn on the surface **100s** can be easily erased through physical rubbing with an eraser (i.e., thus being capable of being written or erased). The surface **100s** of the whiteboard film **100** may be just flat enough to allow text characters or the like to be written or erased. In the illustrated case, the surface **100s** of the whiteboard film **100** is the surface **20a** of the absorptive polarizing layer **20;** in the case where the aforementioned protection layer or anti-soiling layer is provided, the surface **100s** of the whiteboard film **100** is the surface of the protection layer or anti-soiling layer.

Information that is displayed on the whiteboard film **100,** i.e., information such as text characters, symbols, diagrams, etc., drawn with ink on the surface **100s** of the whiteboard film **100,** is presented to the viewer in the following manner. Within the external light or illumination light (unpolarized light) that is incident on the whiteboard film **100,** the polarized light which is parallel to the first transmission axis of the absorptive polarizing layer **20** and the second transmission axis of the reflective polarizing layer **10** is transmitted through the absorptive polarizing layer **20** and the reflective polarizing layer **10,** and diffuse-reflected at the surface and/or the interior of the diffuse reflection layer **40.** Within the light that is diffuse-reflected by the diffuse reflection layer **40,** the polarized light which is parallel to the first transmission axis of the absorptive polarizing layer **20** and the second transmission axis of the reflective polarizing layer **10** is consecutively transmitted through the reflective polarizing layer **10** and the absorptive polarizing layer **20,** so as to reach the viewer. When nothing is drawn on the surface **100s,** the whiteboard film **100** appears white; when text characters or the like are drawn with ink on the surface **100s,** light of a specific wavelength is absorbed by the ink (pigment), so that information such as text characters, symbols, diagrams, etc., drawn on the surface **100s** of the whiteboard film **100** are presented to the viewer. Within the light that is diffuse-reflected by the diffuse reflection layer **40,** the polarized light which is orthogonal to the second transmission axis of the reflective polarizing layer **10** is reflected by the reflective polarizing layer **10,** so as to be again incident on and diffuse-reflected by the diffuse reflection layer **40,** whereby its degree of polarization is lowered (depolarized). Within the light that is diffuse-reflected by the diffuse reflection layer **40,** the polarized light which is parallel to the first transmission axis of the absorptive polarizing layer **20** and the second transmission axis of the reflective polarizing layer **10** is transmitted through the reflective polarizing layer **10** and the absorptive polarizing layer **20,** while the polarized light which is orthogonal to the second transmission axis of the reflective polarizing layer **10** is reflected by the reflective polarizing layer **10** so as to be again incident on and diffuse-reflected by the diffuse reflection layer **40,** and this process is repeated; as a result, an improved efficiency of light utilization is provided. Because the whiteboard film **100** can provide an improved white luminance, the visibility of displayed information can be improved.

Because the whiteboard film **100** includes the absorptive polarizing layer **20** at the front surface, it also has an advantage in that the influence of external light reflection can be reduced.

The whiteboard film **100** can also be used as a projector screen. When an image is projected onto the whiteboard film **100** by using a projector, information that is displayed on the whiteboard film **100,** i.e., an image that is projected on the whiteboard film **100,** can be presented to viewer as follows. Within the light that is emitted from the projector, the polarized light which is parallel to the first transmission axis of the absorptive polarizing layer **20** and the second transmission axis of the reflective polarizing layer **10** is transmitted through the absorptive polarizing layer **20** and the reflective polarizing layer **10,** and diffuse-reflected by the diffuse reflection layer **40.** Within the light that is diffuse-reflected by the diffuse reflection layer **40,** the polarized light which is parallel to the first transmission axis of the absorptive polarizing layer **20** and the second transmission axis of the reflective polarizing layer **10** is consecutively transmitted through the reflective polarizing layer **10** and the absorptive polarizing layer **20** to reach the viewer, whereby the image projected on the whiteboard film **100** is presented to the viewer. Within the light that is diffuse-reflected by the diffuse reflection layer **40,** the polarized light which is parallel to the first transmission axis of the absorptive polarizing layer **20** and the second transmission axis of the reflective polarizing layer **10** is transmitted through the reflective polarizing layer **10** and the absorptive polarizing layer **20,** while the polarized light which is orthogonal to the second transmission axis of the reflective polarizing layer **10** is reflected by the reflective polarizing layer **10** so as to be again incident on and diffuse-reflected by the diffuse reflection layer **40,** and this process is repeated; as a result, an improved efficiency of light utilization is provided. In the case where the whiteboard film **100** is used as a projector screen, too, inclusion of the reflective polarizing layer **10** allows the utilization efficiency of light that is emitted from the projector to be improved. The whiteboard film **100** allows the visibility of displayed information to be improved.

Using the whiteboard film **100** as a projector screen allows the utilization efficiency of light that is emitted from the projector to be improved, and thus there is little need to use a high-luminance projector in order to secure visibility of displayed information. Moreover, because specular reflection at the surface of the diffuse reflection layer **40** is suppressed, there is also provided an advantage in that local brightening of a portion(s) of the projector screen due to specular reflection (hot spot(s)) is suppressed.

In the case where the whiteboard film **100** is used as a projector screen, an anti-reflection layer disposed on the surface **20a** of the absorptive polarizing layer **20** may further be provided. By including an anti-reflection layer at the topmost surface, specular reflection at the surface **100s** of the whiteboard film **100** is suppressed, whereby occurrence of hot spots is further reduced.

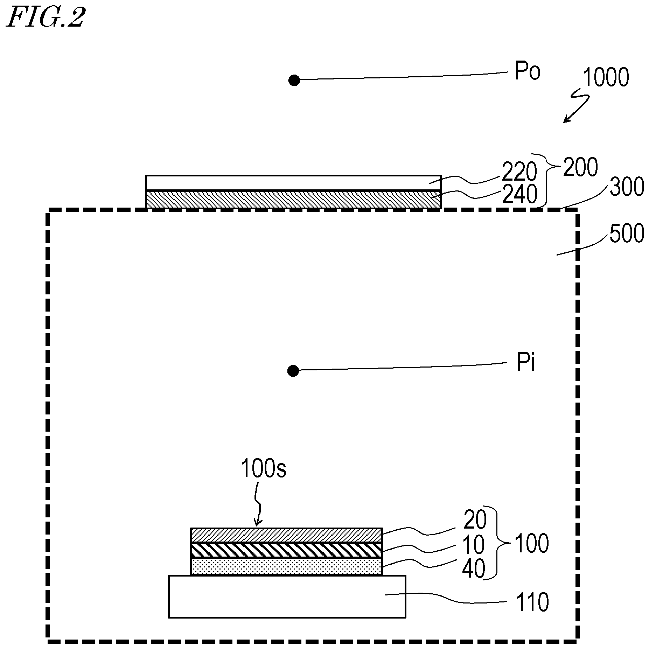

For example, Japanese Patent No. 2958558 and Japanese Laid-Open Patent Publication No. H08-142581 disclose a projector screen structured so that a diffusion layer, an absorptive polarizing layer, and a specular reflection layer (aluminum layer) are disposed in this order from the viewer's side. Unlike the projector screens disclosed in these publications, the whiteboard film **100** includes a diffuse reflection layer **40** instead of a specular reflection layer, thus having an advantage in that no diffusion layer is needed at the viewer's side. Polarized light that is transmitted through the diffusion layer becomes depolarized. Therefore, as in a peeking prevention system described below with reference to FIG. **2****,** from the standpoint of utilizing polarized light in order to obscure the information that is displayed on the whiteboard film **100** from a person who is outside the space in which the whiteboard film **100** is disposed, it is preferable that the whiteboard film **100** does not include a diffusion layer at the viewer's side of the absorptive polarizing layer **20** (i.e., at the opposite side of the absorptive polarizing layer **20** from the reflective polarizing layer **10**).

The whiteboard film **100** may include adhesion layers, each between the diffuse reflection layer **40** and the reflective polarizing layer **10** and between the reflective polarizing layer **10** and the absorptive polarizing layer **20** independently.

FIG. **2** is a diagram schematically showing a peeking prevention system **1000** that includes the whiteboard film **100,** as viewed from above. As shown in FIG. **2****,** the peeking prevention system **1000** includes: a whiteboard film **100;** and a partition **300** to delimit from the surroundings a space **500** in which information displayed on the whiteboard film **100** is to be displayed, the partition **300** having a light-transmitting portion **200** through which the inside of the space **500** is viewable. The light-transmitting portion **200** includes: a transparent substrate **220;** and a polarizing layer **240** having a third transmission axis which is orthogonal to the first direction. "Information displayed on the whiteboard film **100**" may be, for example, text characters, symbols, diagrams, etc., drawn on the surface **100s** of the whiteboard film **100** with ink, or, alternatively, an image projected onto the whiteboard film **100** by using a projector. In this example, the whiteboard film **100** is attached to a base **110.** The base **110** supports the whiteboard film **100** so that the surface **100s** of the whiteboard film **100** is essentially parallel to the vertical direction, for example. In the case where the whiteboard film **100** is to be used as a projector screen, the peeking prevention system **1000** includes a projector which is provided inside the space **500** to emit light toward the surface **100s** of the whiteboard film **100.**

As described above, within the light that is diffuse-reflected by the diffuse reflection layer **40,** polarized light which is parallel to the transmission axis of light and transmitted through the absorptive polarizing layer **20** (i.e., polarized light parallel to the first direction) reaches a viewer **Pi** in the space **500,** whereby information displayed on the whiteboard film **100** is presented to the viewer **Pi** in the space **500.** Because polarized light which is parallel to the first direction cannot be transmitted through the polarizing layer **240** having the third transmission axis which is orthogonal to the first direction, the person **Po** who is outside the space **500** cannot see the information displayed on the whiteboard film **100.** In general, the degree of polarization of the reflective polarizing layer **10** is lower than the degree of polarization of the absorptive polarizing layer **20;** therefore, inclusion of the absorptive polarizing layer **20** in addition to the reflective polarizing layer **10** provides better obscuring of the information displayed on the whiteboard film **100** for the person **Po** who is outside the space **500** (blinding).

Note that, even when the angle made by the transmission axis of the absorptive polarizing layer **20** and the transmission axis of the polarizing layer **420** is not 90°, so long as the margin of error is within ±10° of 90°, information displayed on the whiteboard film **100** can be made substantially unviewable when the person **Po** who is outside the space **500** looks at the whiteboard film **100** through the polarizing layer **420** of the light-transmitting portion **200.**

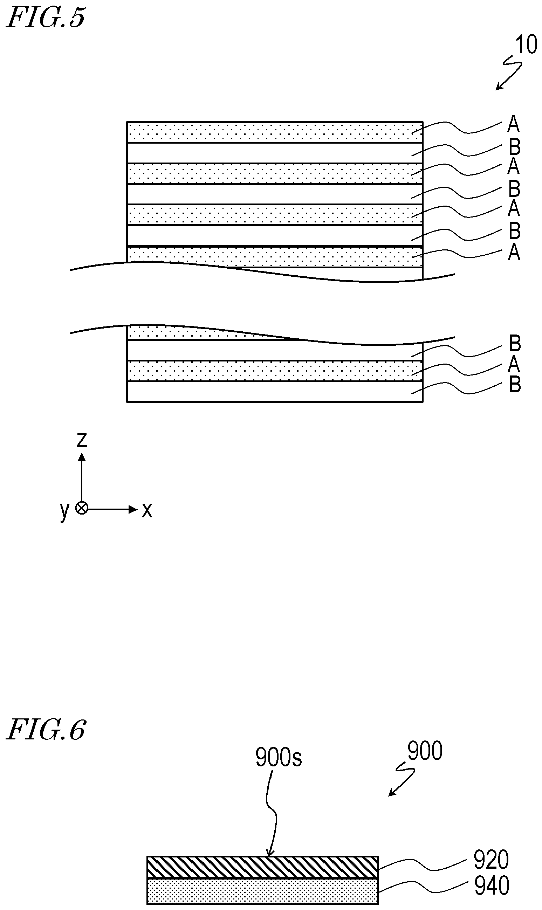

FIG. **6** shows a schematic cross-sectional view of a whiteboard film **900** according to Comparative Example.

The whiteboard film **900** according to Comparative Example includes: a diffuse reflection layer **940** to diffuse-reflect visible light; and an absorptive polarizing layer **920.** The whiteboard film **900** according to Comparative Example differs from the whiteboard film **100** according to an embodiment of the present invention in that it includes no reflective polarizing layer.

Information that is displayed the whiteboard film **900** according to Comparative Example, i.e., information such as text characters, symbols, diagrams, etc., drawn with ink on a surface **900s** of the whiteboard film **900,** is presented to the viewer in the following manner. Within the external light or illumination light (unpolarized light) that is incident on the whiteboard film **900,** polarized light which is parallel to the transmission axis of the absorptive polarizing layer **920** is transmitted through the absorptive polarizing layer **920,** and diffuse-reflected at the surface and/or the interior of the diffuse reflection layer **940.** Within the light that is diffuse-reflected by the diffuse reflection layer **940,** polarized light which is transmitted through the absorptive polarizing layer **920** (i.e., polarized light which is parallel to the transmission axis of the absorptive polarizing layer **920**) has its light of a specific wavelength absorbed by ink (pigment), e.g., text characters drawn on the surface **900s,** and thereafter reaches the viewer. Thus, information such as text characters, symbols, diagrams, etc., drawn on the surface **900s** are presented to the viewer. Within the light that is diffuse-reflected by the diffuse reflection layer **940,** polarized light which is orthogonal to the transmission axis of the absorptive polarizing layer **920** is absorbed by the absorptive polarizing layer **920,** and therefore does not reach the viewer. The whiteboard film **900** according to Comparative Example has a low efficiency of light utilization.

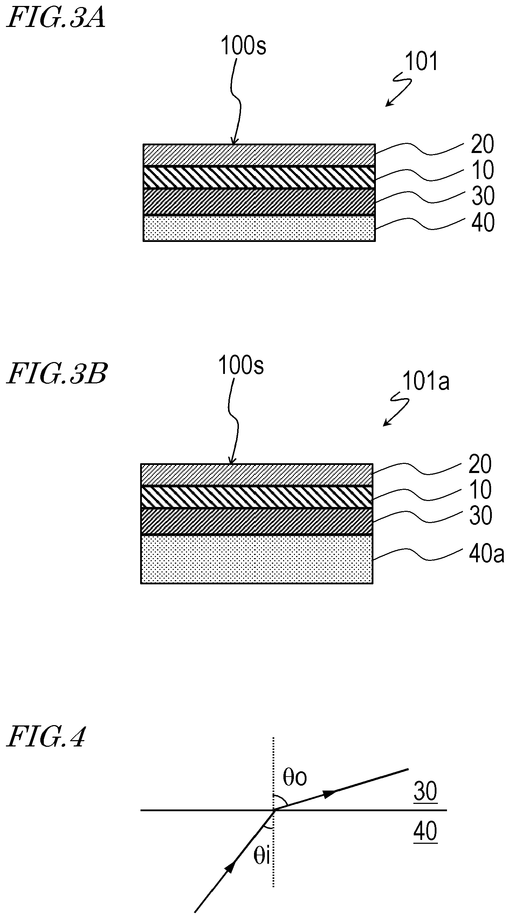

FIG. **3A** shows a schematic cross-sectional view of a whiteboard film **101** according to another embodiment of the present invention.

As shown in FIG. **3A****,** the whiteboard film **101** differs from the whiteboard film **100** in that a low-refractive index layer **30** disposed between the diffuse reflection layer **40** and the reflective polarizing layer **10** is further provided. Differences from the whiteboard film **100** will mainly be described.

The low-refractive index layer **30** has a smaller refractive index than that of the diffuse reflection layer **40.** The low-refractive index layer **30,** which is transparent with respect to visible light, is made of a light-transmitting material. The refractive index of the low-refractive index layer **30** is preferably 1.30 or less, for example. The low-refractive index layer **30** may be an air layer. Alternatively, the low-refractive index layer **30** may be a porous layer described later. The low-refractive index layer **30** may be made of an adhesive (e.g., an adhesive having a refractive index of not less than 1.4 and not more than 1.6).

As will be described below, because of including the low-refractive index layer **30,** the whiteboard film **101** allows the utilization efficiency of light that is diffuse-reflected inside the diffuse reflection layer **40** to be improved; as a result, a further improved efficiency of light utilization is provided over the whiteboard film **100.**

Because the refractive index of the low-refractive index layer **30** is smaller than the refractive index of the diffuse reflection layer **40,** within the light that is diffuse-reflect inside the diffuse reflection layer **40,** light which is incident on the low-refractive index layer **30** at an angle which is equal to the critical angle or greater undergoes total reflection (total internal reflection) at the interface between the diffuse reflection layer **40** and the low-refractive index layer **30.** A portion of light having an incident angle **θi** which is smaller than the critical angle enters the low-refractive index layer **30.** Within the light that enters the low-refractive index layer **30,** light having a large outgoing angle **θο** from the diffuse reflection layer **40** to the low-refractive index layer **30,** e.g., as shown in FIG. **4****,** may leak at the end of the low-refractive index layer **30,** possibly resulting in a loss of light. When the critical angle is small, a large portion of light undergoes total reflection, whereby the aforementioned loss of light can be suppressed. From the standpoint of improving the efficiency of light utilization, the critical angle is preferably small; therefore, a ratio nl/nr of the refractive index nl of the low-refractive index layer **30** to the refractive index nr of the diffuse reflection layer **40** is preferably small. For example, in the case where the diffuse reflection layer **40** is made of polyvinyl chloride (nr=1.56) and the low-refractive index layer **30** is made of an acrylic adhesive (nl=1.48), nl/nr=0.949, and the critical angle is 72°. For the same diffuse reflection layer **40** (nr=1.56), if the low-refractive index layer **30** is an air layer (nl=1.00), then nl/nr=0.641, and the critical angle is 40°.

In the illustrated example, the low-refractive index layer **30** is directly formed on the surface of the reflective polarizing layer **10;** that is, the low-refractive index layer **30** is directly in contact with the reflective polarizing layer **10.** Without being limited to this example, a whiteboard film according to an embodiment of the present invention may include a further layer that is transparent with respect to visible light (e.g., an acrylic resin or PET film) between the low-refractive index layer **30** and the reflective polarizing layer **10.**

Similarly to the whiteboard film **100,** by including the reflective polarizing layer **10** between the diffuse reflection layer **40** and the absorptive polarizing layer **20,** the whiteboard film **101** provides an improved efficiency of light utilization. The whiteboard film **101** allows the visibility of displayed information to be improved.

Instead of using the whiteboard film **100** in the peeking prevention system **1000,** the whiteboard film **101** may be used, whereby information displayed on the whiteboard film **101** can be made invisible from outside of the space **500.**

FIG. **3B** shows a schematic cross-sectional view of a whiteboard **101a** according to another embodiment of the present invention.

As shown in FIG. **3B****,** the whiteboard **101a** differs from the whiteboard **100a** in that a low-refractive index layer **30** disposed between the diffuse reflection plate **40a** and the reflective polarizing layer **10** is further provided. The whiteboard **101a** also attains effects similar to those of the whiteboard film **101.**

### A2. whiteboard film system and whiteboard system

A whiteboard film system according to an embodiment of the present invention includes: the aforementioned whiteboard film; a plurality of light-emitting devices to emit infrared light onto a surface of the whiteboard film at the viewer's side; and a plurality of photodetection devices to receive the infrared light emitted from the plurality of light-emitting devices, the photodetection devices being provided so as to at least partly oppose the plurality of light-emitting devices. A whiteboard system according to an embodiment of the present invention differs from the whiteboard film system according to an embodiment of the present invention in that it incorporates the aforementioned whiteboard, instead of the whiteboard film. A peeking prevention system according to an embodiment of the present invention includes: the aforementioned whiteboard film system or whiteboard system; and a partition to delimit from the surroundings a space in which information displayed on the whiteboard film or whiteboard is presented, the partition having a light-transmitting portion through which the inside of the space is viewable. The light-transmitting portion includes: a transparent substrate; and a polarizing layer having a transmission axis (third transmission axis) that is orthogonal to the first direction.

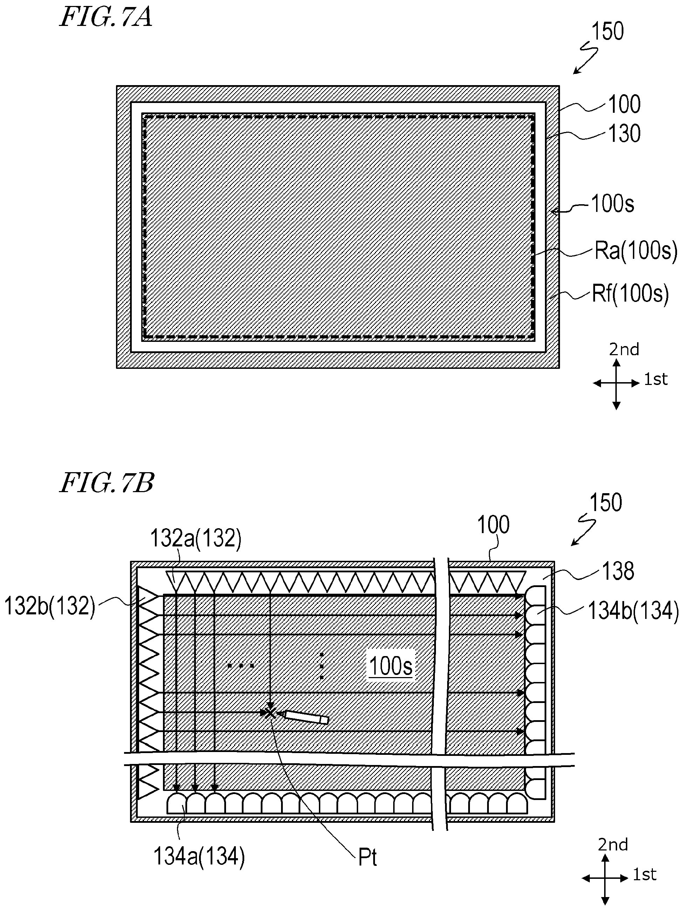

FIG. **7A** and FIG. **7B** are diagrams schematically showing a whiteboard film system **150** that includes the whiteboard film **100,** each depicting the surface **100s** (at the viewer's side) of the whiteboard film **100** in a plan view as viewed from the normal direction of the surface **100s.**

As shown in FIG. **7A** and FIG. **7B****,** the whiteboard film system **150** includes: the whiteboard film **100;** a plurality of light-emitting devices (e.g., infrared LEDs) **132** to emit infrared light onto the surface **100s** of the whiteboard film **100** at the viewer's side; and a plurality of photodetection devices (e.g., infrared sensors) **134** to receive the infrared light emitted from the plurality of light-emitting devices **132,** the photodetection devices **134** being provided so as to at least partly oppose the plurality of light-emitting devices **132.** In FIG. **7B****,** infrared light rays that are emitted from the light-emitting devices **132** are schematically shown by arrows. The plurality of light-emitting devices **132** and the plurality of photodetection devices **134** together constitute a touch sensor **130.** The touch sensor **130** is an infrared-type touch sensor. The plurality of light-emitting devices **132** and the plurality of photodetection devices **134** are provided so as to enable detection of a position **Pt** of any object (e.g., a pen, a marker, an eraser, a hand, or a finger) that may be in contact with the surface **100s** of the whiteboard film **100** at the viewer's side and intercept the infrared light, or the position of any such object that may be situated close to the surface **100s** and intercept the infrared light.

For example, the plurality of light-emitting devices **132** are provided in a peripheral region **Rf** (i.e., a region that follows the outer contour of the surface **100s**) of the surface **100s** of the whiteboard film **100.** The plurality of light-emitting devices **132** are disposed above the surface **100s** (i.e., on the viewer's side of surface **100s**), so as to emit infrared light in a first direction and a second direction which are parallel to the surface **100s.** The second direction is a distinct direction from the first direction, e.g., a direction that is orthogonal to the first direction. The plurality of light-emitting devices **132** include some first light-emitting devices **132a** that are arranged along the first direction and some second light-emitting devices **132b** that are arranged along the second direction. The plurality of photodetection devices **134** include some first photodetection devices **134a** that are arranged along the first direction and some second photodetection devices **134b** that are arranged along the second direction. In the illustrated example, the plurality of light-emitting devices **132** are provided so as to respectively oppose the corresponding photodetection devices **134.** Herein, the plurality of light-emitting devices **132** and the plurality of photodetection devices **134** are supported by a frame-shaped frame **138** that is provided in the peripheral region **Rf** of the surface **100s.** The whiteboard film system **150** may further include a control device(s) to drive the plurality of light-emitting devices **132** and the plurality of photodetection devices **134.** The position and the correspondence between the light-emitting devices and the photodetection devices are not limited to what is illustrated, and any known infrared-type touch sensor structure is applicable. It may be modified as required by the shape or the intended use of the whiteboard film, etc.

A region within the surface **100s** of the whiteboard film **100** at the viewer's side, which is surrounded by the plurality of light-emitting devices **132** and the plurality of photodetection devices **134** (illustrated herein as an inner region of the frame **138**), may be referred to as an effective region **Ra.** The effective region **Ra** is a region within the surface **100s** of the whiteboard film **100** where a position **Pt** that is touched (or approached) by a pen, a marker, an eraser, etc., is detectable by the touch sensor **130**. In FIG. **7A**, the effective region **Ra** is depicted as a region surrounded by broken lines. Any region of the surface **100s** of the whiteboard film **100** at the viewer's side other than the effective region **Ra** may be defined as the peripheral region **Rf.** As the touch sensor **130** detects from time to time (e.g., at predetermined time intervals) a position at which the effective region **Ra** of the surface **100s** was touched (or approached) by a pen, a marker, an eraser, etc., the whiteboard film system **150** is able to acquire (digitize) information such as text characters, symbols, diagrams, etc., that are drawn with ink in the effective region **Ra** of the surface **100s,** as data. The whiteboard film system **150** can digitize the information that is drawn with ink in the effective region **Ra** of the surface **100s** in real time.

The frame **138** is provided in such a manner that the effective region **Ra** of the surface **100s** of the whiteboard film **100** is exposed. Because the effective region **Ra** of the surface **100s** of the whiteboard film **100** is exposed from the frame **138,** provision of the touch sensor **130** on the whiteboard film **100** does not significantly detract from the effects of the whiteboard film **100.** The whiteboard film system **150** also attains effects similar to those of the whiteboard film **100.** In other words, in the whiteboard film system **150,** too, the whiteboard film **100** allows the visibility of displayed information to be improved. In a peeking prevention system that incorporates the whiteboard film system **150** instead of the whiteboard film **100,** too, information that is displayed on the surface **100s** of the whiteboard film **100** is obscured from the person **Po** who is outside the space **500** (blinding). If a capacitance-based touch sensor is used as the touch sensor, for example, a transparent electrode layer (a transparent electrically-conductive layer including patterned electrodes) will need to be provided above the effective region **Ra** of the surface **100s** of the whiteboard film **100.** A protection layer (protection film) covering the transparent electrode layer may also be provided as needed. The existence of such a transparent electrode layer and/or a protection layer being provided above the effective region **Ra** of the surface **100s** may detract from the effects of the whiteboard film **100,** i.e., improvements on the visibility of the information displayed on the surface **100s.** Also, if a whiteboard film system that includes a capacitance-based touch sensor is applied to a peeking prevention system, the effects of obscuring the information displayed on the surface **100s** from the person **Po** who is outside the space **500** may be compromised. On the other hand, diminishing of the effects of whiteboard film **100** can be suppressed in a whiteboard film system **150** that includes an infrared-type touch sensor **130.**

The frame **138** may be attached onto the surface **100s** of the whiteboard film **100** with a magnet, for example. The frame **138** may be removably attached to the whiteboard film **100.** Without being limited to this example, the touch sensor **130** may be bonded to the whiteboard film **100** with an adhesive, or fixed on the whiteboard film **100.**

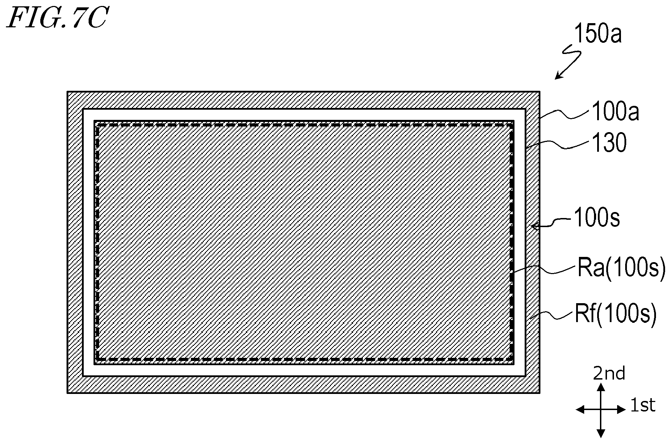

FIG. **7C** schematically shows a whiteboard system **150a** that includes the whiteboard **100a** and the touch sensor **130.**

As shown in FIG. **7C****,** the whiteboard system **150a** differs from the whiteboard film system **150** in that it incorporates the whiteboard **100a,** instead of the whiteboard film **100.** Using the whiteboard system **150a** which incorporates the whiteboard **100a** also attains effects similar to those of the whiteboard film system **150.**

Instead of the whiteboard film **100,** a whiteboard film system according to an embodiment of the present invention may incorporate any of the whiteboard films according to embodiments of the present invention. For example, a whiteboard film system according to an embodiment of the present invention may incorporate the whiteboard film **101** instead of the whiteboard film **100.** A whiteboard film system including the whiteboard film **101** and the touch sensor **130** also attains effects similar to those of the whiteboard film system **150.** Furthermore, in the whiteboard film system including the whiteboard film **101** and the touch sensor **130,** the whiteboard film **101** featuring the low-refractive index layer **30** can further improve the visibility of the information displayed on the whiteboard film **101** over what is attained by the whiteboard film **100** included in the whiteboard film system **150.**

Instead of the whiteboard **100a,** a whiteboard system according to an embodiment of the present invention may incorporate any of the whiteboards according to embodiments of the present invention. For example, a whiteboard system according to an embodiment of the present invention may incorporate the whiteboard **101a** instead of the whiteboard **100a.** A whiteboard system including the whiteboard **101a** and the touch sensor **130** also attains effects similar to those of the whiteboard system **150a.** Furthermore, in the whiteboard system including the whiteboard **101a** and the touch sensor **130**, the whiteboard **101a** featuring the low-refractive index layer **30** can further improve the visibility of the information displayed on the whiteboard **101a** over what is attained by the whiteboard **100a** included in the whiteboard system **150a.**

### B. absorptive polarizing layer

The absorptive polarizing layer (which hereinafter may simply be referred to as a polarizer) is, typically, a resin film having a dichroic substance (e.g., iodine) adsorbed thereon and being given an orientation. For example, the absorptive polarizing layer may be a single-layered resin film, or a stack of two or more layers of resin film.

Specific examples of absorptive polarizing layers composed of a single-layered resin film include: a hydrophilic polymer film, e.g., a polyvinyl alcohol (PVA)-based film, a partially formalated PVA-based film, or an ethylene vinyl acetate copolymer-based partially saponified film, such hydrophilic polymer films having been subjected to dyeing treatment with iodine, dichroic dyes, or other dichroic substances as well as drawing; polyene-based oriented films, e.g., dehydrated PVA and dechlorinated polyvinyl chloride; and so on. Preferably, an absorptive polarizing layer which is obtained by dyeing a PVA-based film with iodine and uniaxially drawing it is used because of its superior optical characteristics.

The aforementioned dyeing with iodine is performed, for example, by immersing the PVA-based film in an aqueous solution of iodine. The stretching ratio of the aforementioned uniaxial drawing is preferably not less than 3 times and not more than 7 times. Drawing may be done after dyeing treatment or while dyeing. Alternatively, dyeing may take place after drawing. If necessary, PVA-based films are subjected to swelling treatment, cross-linking treatment, washing treatment, drying treatment, and the like. For example, before dyeing, the PVA-based film may be immersed in water and rinsed to clean the PVA-based film surface of dirt and any blocking inhibitor, and also to allow the PVA-based film to swell in order to prevent uneven dyeing and the like.

Specific examples of an absorptive polarizing layer obtained by using a stack are absorptive polarizing layers obtained by using a stack of a resin base and a PVA-based resin layer (PVA-based resin film) that is layered on the resin base, or a stack of a resin base and a PVA-based resin layer applied on the resin base. An absorptive polarizing layer that is obtained by using a stack of a resin base and a PVA-based resin layer applied on the resin base can be formed by, for example: applying a PVA-based resin solution on a resin base, and drying it to form a PVA-based resin layer on the resin base, thereby obtaining a stack consisting of the resin base and the PVA-based resin layer; and drawing and dyeing the stack so that the PVA-based resin layer becomes a polarizer. In the present embodiment, typically, drawing involves immersing a stack in an aqueous boric acid solution and drawing it. Furthermore, as necessary, drawing may further involve drawing a stack in air at a high temperature (e.g., 95°C or above) before drawing it in the aqueous boric acid solution. The resultant resin base/polarizer stack may be used as it is (i.e., the resin base may be used as a protection layer for the polarizer), or the resin base may be peeled off the resin base/polarizer stack, and any appropriate protection layer suited for the purpose may be layered on the peeled surface. Details of such a method of producing a polarizer are described in Japanese Laid-Open Patent Publication No. 2012-73580, for example. The entire disclosure of this publication is incorporated herein by reference.

The absorptive polarizing layer preferably exhibits an absorption dichroism at a wavelength from 380 nm to 780 nm. The absorptive polarizing layer has a single transmittance of preferably not less than 42.0% and not more than 46.0%, and more preferably not less than 42.5% and not more than 45.0%. The absorptive polarizing layer has a degree of polarization of preferably 97.0% or more, more preferably 99.0% or more, and even more preferably 99.9% or more.

The absorptive polarizing layer may have a thickness of e.g. not less than 1 um and not more than 80 um. The thickness of the absorptive polarizing layer is preferably not less than 1 um and not more than 30 µm, more preferably not less than 3 um and not more than 20 µm, and even more preferably not less than 5 um and not more than 18 µm.

### C. reflective polarizing layer

The reflective polarizing layer includes a reflective polarizer that functions to transmit polarized light in a direction that is parallel to the transmission axis and to reflect polarized light that is orthogonal to the transmission axis. The reflective polarizer may be of a linear polarization separation type, or of a circular polarization separation type. Hereinafter, as an example, a reflective polarizer of a linear polarization separation type will be briefly described. Note that a reflective polarizer of a circular polarization separation type may be exemplified by a stack of a film on which cholesteric liquid crystal is immobilized and a λ/4 plate.

FIG. 5 is a cross-sectional view schematically showing an example structure of the reflective polarizing layer 10. The reflective polarizing layer **10** includes a reflective polarizer, as a multilayer stack in which layers A having birefringence and layers B having substantially no birefringence are alternately layered along the z axis direction. The total number of layers in such a multilayer stack may be not less than 50 and not more than 1000, for example. For example, an A layer has a refractive index nx along the x axis direction that is greater than a refractive index ny along the y axis direction, whereas a B layer has a refractive index nx along the x axis direction and a refractive index ny along the y axis direction that are substantially equal. Therefore, the difference in refractive index between an A layer and a B layer is large along the x axis direction, but substantially zero along the y axis direction. As a result of this, the x axis direction serves as a reflection axis (which is perpendicular to the transmission axis), whereas the y axis direction serves as a transmission axis. The difference in refractive index between an A layer and a B layer along the x axis direction is preferably not less than 0.2 and not more than 0.3. Note that the x axis direction corresponds to the drawing direction of a reflective polarizer in the production method for the reflective polarizer.

The A layers are preferably made of a material that exhibits birefringence after being drawn. Representative examples of such materials include naphthalene dicarboxylic acid polyesters (e.g., polyethylene naphthalate), polycarbonates, and acrylic resins (e.g., polymethyl methacrylate). Polyethylene naphthalate is preferable. The B layers are preferably made of a material that substantially does not exhibit birefringence even when drawn. A representative example of such a material is a copolyester of naphthalene dicarboxylic acid and terephthalic acid.

As the reflective polarizer, those described in Japanese National Phase PCT Laid-Open Publication No. H09-507308 may be used, for example. As the reflective polarizer, commercially available products may be used as they are, or commercially available products may be used after being subjected to secondary processing (e.g., drawing). Commercially available products include, for example, a product named DBEF (DBEF is a registered trademark) manufactured by 3M Co. and a product named APF manufactured by 3M Co.

### D. diffuse reflection layer or diffuse reflection plate

The diffuse reflectance (i.e., a sum of surface diffuse reflectance and internal diffuse reflectance) of the diffuse reflection layer or diffuse reflection plate is preferably 80% or more, and more preferably 90% or more, for example. A specular reflection component in the total reflected light when visible light is incident on the diffuse reflection layer or diffuse reflection plate is preferably 50% or less (that is, there is a diffuse reflection component of 50% or more), for example.

The diffuse reflection layer or diffuse reflection plate has a surface with bump/dent features for diffusereflecting visible light, for example. Disposing the reflective polarizing layer on the surface of a diffuse reflection layer or diffuse reflection plate having bump/dent features makes it easy to form an air layer (low-refractive index layer) between the diffuse reflection layer or diffuse reflection plate and the reflective polarizing layer, and, even if an air layer is formed, Newton's rings are restrained from occurring. The diffuse reflection layer or diffuse reflection plate may be made of a resin composition containing silica microparticles or other microparticles dispersed in a resin, for example. In this case, however, Newton's rings may occur if an air layer is provided so as to be in contact with the diffuse reflection layer or diffuse reflection plate; therefore, when an air layer is provided as a low-refractive index layer, the diffuse reflection layer or diffuse reflection plate to be used preferably has a surface with bump/dent features to diffuse-reflect visible light. When an adhesive layer that is in contact with the diffuse reflection layer or diffuse reflection plate is provided, preferably the diffuse reflection layer or diffuse reflection plate does not have a surface with bump/dent features; for example, the diffuse reflection layer or diffuse reflection plate is preferably made of a resin composition containing silica microparticles or other microparticles dispersed in a resin. For example, in the case where a low-refractive index layer other than an air layer (e.g., a porous layer) is provided, the low-refractive index layer is attached to the diffuse reflection layer or diffuse reflection plate typically via an adhesive layer.

As the diffuse reflection layer, for example, white matte PET films (e.g., Lumirror E6SR, E22, E6DY, which are polyester films manufactured by Toray Industries, Inc.) (Lumirror is a registered trademark), printing paper for printers (white), screen sheets for projectors, coating on a steel partition that is painted white (resin film containing pigments), etc., can be used.

As the diffuse reflection plate, for example, white matte acrylic resin plates (PMMA) (e.g., COMOGLAS M (bone white) and COMOGLAS DFA2 (both-side matted) white M, manufactured by Kuraray Co., LTD.; Sumipex M067 white matte and Sumipex 068 white, manufactured by Sumitomo Bakelite Co., Ltd.) (COMOGLAS and Sumipex are registered trademarks) can be used.

As a base supporting the diffuse reflection layer, for example, an iron plate or a stainless steel plate (SUS plate) can be used. When a screen sheet for use with projectors that has a magnet thereon is used, it can be directly attached onto a magnetic plate (e.g., SUS403). Without being limited to this, a diffuse reflection layer may be bonded to the base by using an adhesive.

### E. low-refractive index layer

The low-refractive index layer may have a porous structure. The low-refractive index layer may be made of a porous layer. Porous layers suitably used as the low-refractive index layer include silica particles, silica particles with micropores, essentially spherical particles such as silica hollow nanoparticles, fibrous particles such as cellulose nanofibers, alumina nanofibers, silica nanofibers, and flat-plate particles such as nanoclay composed of bentonite. In one embodiment, the porous layer is a porous material composed of particles (e.g., micropored particles) that are chemically bonded directly to one another. The particles composing the porous layer may be at least partially bonded to one another via a small amount (e.g., less than the mass of the particles) of a binder component. The porosity and refractive index of the porous layer can be adjusted based on the particle size, particle size distribution, and the like of the particles composing the porous layer.

Examples of methods of obtaining a porous layer include a method of forming a low-refractive index layer described in International Publication No. 2019/146628, and methods described in Japanese Laid-Open Patent Publication No. 2010-189212, Japanese Laid-Open Patent Publication No. 2008-040171, Japanese Laid-Open Patent Publication No. 2006-011175, International Publication No. 2004/113966, Japanese Laid-Open Patent Publication No. 2017-054111, Japanese Laid-Open Patent Publication No. 2018-123233, and Japanese Laid-Open Patent Publication No. 2018-123299, as well as the references mentioned therein. The entire disclosure of these publications is incorporated herein by reference.

As the porous layer, porous silica can be suitably used. Porous silica can be produced by the following method, for example: a method involving hydrolyzing and polycondensing at least one of silicon compounds, hydrolyzable silanes and/or silsesquioxanes, and their partial hydrolysates and dehydration-condensation products; a method that uses porous particles and/or hollow microparticles; and a method that generates an aerogel layer using the springback phenomenon, a method of pulverizing a gelatinous silicon compound obtained by sol-gel processing and using a pulverized gel in which micropored particles as the resultant pulverized body are chemically bonded to one another with a catalyst or the like; and so on. However, the porous layer is not limited to porous silica, and the production method is not limited to the exemplified production methods; any production method may be used for production. Silsesquioxane is a silicon compound with (RSiO_{1.5}; where R is a hydrocarbon group) as the basic structural unit. Although silsesquioxane is not exactly the same as silica, whose basic structural unit is SiO₂, it has a network structure cross-linked by siloxane bonds, similarly to silica. Therefore, any porous material that contains silsesquioxane as its basic structural unit is also referred to as porous silica or silica-based porous material.

Porous silica may be composed of micropored particles of a gelatinous silicon compound that are bonded to one another. An example of micropored particles of a gelatinous silicon compound is a pulverized body of the gelatinous silicon compound. Porous silica may be formed by coating a base with a coating solution that contains a pulverized body of a gelatinous silicon compound, for example. The pulverized body of the gelatinous silicon compound may chemically bonded (e.g., siloxane bonded) through catalytic action, light irradiation, heating, or the like, for example.

The lower limit value of the thickness of the porous layer may be any value that is greater than the wavelength of light used, for example. Specifically, the lower limit value may be e.g. 0.3 um or more. Although the upper limit value of the thickness of the porous layer is not particularly limited, it may be e.g. 5 um or less, and more preferably 3 um or less. So long as the thickness of the porous layer is within the above range, the bumps and dents of the surface will not be so large as to affect layering, and therefore it can be easily made into a composite or layered with another member.

The refractive index of the porous layer is preferably 1.30 or less, for example. This makes total internal reflection likely to occur at the interface with the porous layer, i.e., makes the critical angle small. The refractive index of the porous layer is more preferably 1.25 or less, even more preferably 1.18 or less, and particularly preferably 1.15 or less. Although the lower limit of the refractive index of the porous layer is not particularly limited, it is 1.05 or more from the standpoint of mechanical strength.

The lower limit value of the porosity of the porous layer is e.g. 40% or more, preferably 50% or more, more preferably 55% or more, and still more preferably 70% or more. The upper limit value of the porosity of the porous layer is e.g. 90% or less, and more preferably 85% or less. The porosity can be calculated from the refractive index value measured with an ellipsometer, Lorentz-Lorenz's formula, for example.

The film density of the porous layer is e.g. 1 g/cm³ or more, preferably 10 g/cm³ or more, and more preferably 15 g/cm³ or more. On the other hand, the film density is e.g. 50 g/cm³ or less, preferably 40 g/cm³ or less, more preferably 30 g/cm³ or less, and even more preferably 2.1 g/cm³ or less. The range of film density is e.g. not less than 5 g/cm³ and not more than 50 g/cm³, preferably not less than 10 g/cm³ and not more than 40 g/cm³, and more preferably not less than 15 g/cm³ and not more than 30 g/cm³. Alternatively, this range is e.g. not less than 1 g/cm³ and not more than 2.1 g/cm³. Film density may be measured by known methods.

### [Examples]

Hereinafter, the present invention will be specifically described by way of Examples; however, the present invention is not to be limited by these Examples. The method of evaluation in Examples is as follows. As whiteboards for use in a whiteboard system and a peeking prevention system according to embodiments of the present invention, whiteboards according to Examples 1 to 3 which were produced in the following manners were subjected to reflectance measurement. Unless otherwise specified, "part(s)" and "%" in Examples are based on mass.

### <measurement of reflectance>

The spectrophotometer (UV-Vis-NIR Spectrophotometer V-660 manufactured by Japan Spectroscopic Corporation), to which an integrating sphere unit (ISV-722) had been attached, was used to measure total reflectance and diffuse reflectance. For each of total reflectance and diffuse reflectance, by using a standard white plate of barium sulfate as a reference sample, the ratio of the amount of light reflected by an Example sample to the amount of light reflected by the reference sample (relative reflectance) was determined. The total reflectance and diffuse reflectance were each obtained by measuring the wavelength range from 430 nm to 780 nm at 2 nm intervals and determining a mean value thereof. The specular reflectance was obtained by subtracting the diffuse reflectance from the total reflectance. The specular reflection component was obtained by determining the ratio of the specular reflectance to the total reflectance.

### <Example 1>

### 1-1. absorptive polarizing layer

A long roll of polyvinyl alcohol (PVA)-based resin film having a thickness of 30 um (Kuraray Co., Ltd. product name: "PE3000") was uniaxially drawn in the longitudinal direction by a roll drawing machine to become 5.9 times as large along the longitudinal direction while simultaneously undergoing swelling, dyeing, cross-linking, and washing treatment, and finally received drying treatment, whereby a polarizer having a thickness of 12 um (single transmittance: 45.1%) was obtained. Specifically, this was as follows: The swelling treatment was performed for a 2.2 times stretch, while treating it with pure water at 20°C. Next, the dyeing treatment was carried out in an aqueous solution at 30°C containing iodine and potassium iodide at a mass ratio of 1:7, the iodine concentration being adjusted so that the resulting polarizer had a single transmittance of 45.0%, thus effecting a 1.4 times stretch. Furthermore, two stages of cross-linking treatment were adopted for the cross-linking treatment. The first stage of cross-linking treatment was performed in an aqueous solution at 40°C in which boric acid and potassium iodide had been dissolved, for a 1.2 times stretch. The boric acid content in the aqueous solution in the first stage of cross-linking treatment was 5.0 mass% and the potassium iodide content was 3.0 mass%. The second stage of cross-linking treatment was performed in an aqueous solution at 65°C in which boric acid and potassium iodide had been dissolved, for a 1.6 times stretch. The boric acid content in the aqueous solution in the second stage of cross-linking treatment was 4.3 mass% and the potassium iodide content was 5.0 mass%. The washing treatment was performed with an aqueous solution of potassium iodide at 20°C. The potassium iodide content in the aqueous solution for the washing treatment was 2.6 mass%. Finally, the drying treatment was performed at 70°C for 5 minutes, whereby a polarizer was provided. Protection films (TAC film; thickness: 25 µm) were attached to both sides of the resulting polarizer, whereby an absorptive polarizing layer was obtained.

### 1-2. whiteboard

As the diffuse reflection plate, a white acrylic resin extrusion plate (manufactured by Kuraray Co., LTD.; product name: "COMOGLAS" M (bone white) #3; thickness: 5 mm; refractive index: 1.49) was provided. On one of the principal faces of the diffuse reflection plate, a reflective polarizing layer (manufactured by 3M Co.; product name: APF) and the absorptive polarizing layer obtained as above were attached in this order, whereby a whiteboard according to Example 1 having a similar configuration to that of the whiteboard **100a** shown in FIG. **1B** was obtained. For the attachment, a transparent tackiness agent (manufactured by Nitto Denko Corporation; product name: LUCIACS CS9862UA; refractive index: 1.49) (LUCIACS is a registered trademark) was used. Reflectance measurements were taken of the whiteboard according to Example 1 by the aforementioned method. The results are shown in Table 1.

### <Example 2>

Except for forming a low-refractive index layer (porous layer, refractive index 1.18) between the reflective polarizing layer and the diffuse reflection plate, the whiteboard according to Example 2 was obtained in a similar manner to Example 1. Reflectance measurements were taken of the whiteboard according to Example 2 by the aforementioned method. The results are shown in Table 1.

The porous layer was produced by the procedure according to [Manufacturing Example 1] to [Manufacturing Example 3] below.

### [Manufacturing Example 1] Preparation of coating solution for forming a low-refractive index layer

### (1) gelation of silicon compound

To 2.2 g of dimethyl sulfoxide (DMSO), 0.95 g of methyltrimethoxysilane (MTMS) as a precursor of the silicon compound was dissolved to prepare Mixture A. To this Mixture A, 0.5 g of 0.01 mol/L oxalic acid aqueous solution was added, and stirred at room temperature for 30 minutes to hydrolyzed the MTMS, thereby producing Mixture B containing tris(hydroxy)methylsilane.

To 5.5 g of DMSO, 0.38 g of 28 mass% ammonia and 0.2 g of pure water were added, after which the aforementioned Mixture B was further added, and stirred at room temperature for 15 minutes, thereby effecting gelation of the tris(hydroxy)methylsilane, whereby Mixture C containing a gelatinous silicon compound was obtained.

### (2) aging process

Mixed solution C, containing the gelatinous silicon compound as prepared above, was incubated as it was at 40°C for 20 hours, thereby effecting an aging process.

### (3) pulverization process

Next, the gelatinous silicon compound that had undergone the aging process as described above was crushed into granules of several millimeters to several centimeters in size, using a spatula. Next, 40 g of isopropyl alcohol (IPA) was added to Mixture C, and this was stirred lightly and allowed to stand at room temperature for 6 hours, thereby decanting the solvent and catalyst in the gel. The same decantation process was performed three times to replace the solvent, whereby Mixture D was obtained. Next, the gelatinous silicon compound in Mixture D was subjected to a pulverization process (high-pressure media-less pulverization). For the pulverization process (high-pressure media-less pulverization), a homogenizer (manufactured by S.M.T.; product name: "UH-50") was used. Into a 5-cc screw bottle, 1.85 g of the gelatinous compound in Mixture D and 1.15 g of IPA were weighed, after which pulverization was performed at 50 W, 20 kHz for 2 minutes.

This pulverization process pulverized the gelatinous silicon compound in the above Mixture D, and thus Mixture D' resulted which was a sol solution of the pulverized material. The volume-averaged particle size, which indicates the grain size variation of the pulverized material in Mixture D', was confirmed using a dynamic light scattering Nanotrac particle size analyzer (manufactured by Nikkiso Co., Ltd.; UPA-EX150) to be 0.50 to 0.70. Furthermore, to 0.75 g of this sol solution (Mixture D'), 0.062 g of a 1.5 mass% concentration MEK (methyl ethyl ketone) solution of a photobase generator (Wako Pure Chemical Industries, Ltd.; product name: WPBG266), and 0.036 g of a 5% concentration MEK solution of bis(trimethoxysilyl) ethane were added, whereby Coating Solution A for forming a low-refractive index layer was obtained.

[Manufacturing Example 2] Preparation of tackiness agent Into a four-necked flask equipped with stirring blades, a thermometer, a nitrogen gas inlet tube, and a cooler, 90.7 parts of butyl acrylate, 6 parts of N-acryloyl morpholine, 3 parts of acrylic acid, 0.3 parts of 2-hydroxybutyl acrylate, and 0.1 mass parts of 2,2'-azobisisobutyronitrile as a polymerization initiator were placed, together with 100 g of ethyl acetate. After nitrogen replacement by introducing nitrogen gas with gentle stirring, the liquid temperature in the flask was kept at around 55°C and a polymerization reaction was carried out for 8 hours, thereby preparing an acrylic polymer solution. To 100 parts in solid content of the resulting acrylic polymer solution, 0.2 parts of an isocyanate cross-linking agent (Coronate L from Nippon Polyurethane Industry Co., Ltd.; 0.2 parts of a tolylene diisocyanate adduct of trimethylolpropane), 0.3 parts of benzoyl peroxide (NYPER BMT, manufactured by Nippon Oil & Fats Co., Ltd. 3 parts, and 0.2 parts of γ-glycidoxypropyl methoxysilane (manufactured by Shin-Etsu Chemical Co., Ltd.: KBM-403) were blended, thereby preparing an acrylic tackiness agent solution. Then, the above acrylic tackiness agent solution was applied to one side of a silicone-treated polyethylene terephthalate (PET) film (manufactured by Mitsubishi Polyester Film Corporation; thickness: 38 µm)) so that the thickness of the tackiness agent layer after drying was a predetermined thickness; and this was dried at 150°C for 3 minutes, thereby producing a tackiness agent layer.

### [Manufacturing Example 3] Production of a stack with tackiness agent layers on both sides

A base (acrylic film) having a thickness of 30 um was coated with Coating Solution A for forming a low-refractive index layer, as prepared in Manufacturing Example 1. The wet thickness (i.e., thickness before drying) of the coating layer was about 27 um. The coating layer was treated at a temperature of 100°C for 1 minute for drying, whereby a low-refractive index layer (thickness: 0.9 um) was formed upon the base. The resultant low-refractive index layer had a refractive index of 1.18. Next, tackiness agent layers as prepared in Manufacturing Example 2 (the tackiness agent layer on the low-refractive index layer side having a thickness of 10 um, the tackiness agent layer on the base side having a thickness of 75 µm) were disposed on both sides of the base/low-refractive index layer stack, thus producing a stack with tackiness agent layers on both sides.

### <Example 3>

As the diffuse reflection plate, a white acrylic resin extrusion plate (manufactured by Kuraray Co., LTD.; product name: "COMOGLAS" DFA2 (both-side matted) white, M, #3; thickness: 5 mm) was used. An absorptive polarizing layer and a reflective polarizing layer were provided in similar manners to Example 1, and the absorptive polarizing layer and the reflective polarizing layer were attached together by using a transparent adhesive, and the attached stack was placed on the diffuse reflection layer (white acrylic resin extrusion plate), whereby a whiteboard according to Example 3 was obtained. The whiteboard according to Example 3 included an air layer (refractive index 1.0) formed between the reflective polarizing layer and the diffuse reflection plate. Reflectance measurements were taken of the whiteboard according to Example 3 by the aforementioned method. The results are shown in Table 1.

### <Comparative Example 1>

Except for not forming a reflective polarizing layer, a whiteboard according to Comparative Example 1 was obtained similarly to Example 1. Reflectance measurements were taken of the whiteboard according to Comparative Example 1 by the aforementioned method. The results are shown in Table 1.

### <Reference Example>

A configuration consisting only of the white acrylic resin extrusion plate used in Example 1 was designated as the whiteboard according to Reference Example. Reflectance measurements were taken of the whiteboard according to Reference Example by the aforementioned method. The results are shown in Table 1.

**[Table 1]**

| | Reference Example | Comparative Example 1 | Example 1 | Example 2 | Example 3 |
|---|---|---|---|---|---|
| diffuse reflection plate | white acrylic resin plate | white acrylic resin plate | white acrylic resin plate | white acrylic resin plate | white acrylic resin plate |
| layer between diffuse reflection plate and reflective polarizing layer (refractive index) | - | adhesion layer (1.49) | adhesion layer (1.49) | porous layer (1.18) | air layer (1.0) |
| reflective polarizing layer | - | - | ○ | ○ | ○ |
| absorptive polarizing layer | - | ○ | ○ | ○ | ○ |
| total reflectance rr+rd [%] | 86.0 | 15.4 | 23.0 | 28.3 | 35.4 |
| specular reflectance rr [%] | 2.6 | 5.2 | 7.3 | 8.8 | 10.9 |
| diffuse reflectance rd [%] | 83.4 | 10.2 | 15.6 | 19.5 | 24.5 |
| specular reflection component rr/(rr+rd) | 3% | 34% | 32% | 31% | 31% |

It can be seen that the whiteboards according to Examples 1 to 3 had high total reflectance and diffuse reflectance as compared to the whiteboard according to Comparative Example 1, indicative of an improved efficiency of light utilization. Also, the whiteboards according to Examples 1 to 3 were improved in terms of visibility of displayed information as compared to the whiteboard according to Comparative Example 1. The whiteboard according to Comparative Example 1 (total reflectance: 15%, diffuse reflectance 10%) did not have sufficient white luminance, so that text characters written on its surface with a black marker did not show sufficient visibility. On the other hand, the whiteboards according to Examples 1 to 3 (total reflectance: 20% or more, diffuse reflectance: 15% or more) had high white luminance as compared to the whiteboard according to Comparative Example 1, and it was confirmed that text characters written on their surface with a black marker had high visibility. It is considered that, because of having high total reflectance and diffuse reflectance as compared to the whiteboard according to Comparative Example 1, the whiteboards according to Examples 1 to 3 had an improved efficiency of light utilization and good visibility of displayed information. Among the whiteboards according to Examples 1 to 3, the whiteboard according to Examples 2 and 3 whose low-refractive index layer had a refractive index of 1.18 or less had higher total reflectance and diffuse reflectance values than those of the whiteboard according to Example 1, thus having an improved efficiency of light utilization and visibility of displayed information.

As the diffuse reflection plate, other than those used in Examples, a cast acrylic board manufactured by Sumitomo Bakelite Co., Ltd. (product name: Sumipex M067 white matte, Sumipex 068 white) or the like can be used. Instead of the white acrylic resin extrusion plates manufactured by Kuraray Co., LTD. that were used in Examples, the inventors also tried similar evaluations by using a cast acrylic board manufactured by Sumitomo Bakelite Co., Ltd. (product name: Sumipex M067 white matte, Sumipex 068 white), which did not show major deviations from the results of Examples.

A whiteboard film system and whiteboard system according to an embodiment of the present invention allows the visibility of displayed information to be improved. A whiteboard film system and whiteboard system according to an embodiment of the present invention is suitably used as a whiteboard or a projector screen.

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

This application is based on Japanese Patent Application No. 2022-068040 filed on April 18, 2022, the entire contents of which are hereby incorporated by reference.

## Claims

1. A whiteboard film system comprising:
a whiteboard film including:
a diffuse reflection layer to diffuse-reflect visible light;
an absorptive polarizing layer having a first transmission axis that is parallel to a first direction; and
a reflective polarizing layer being disposed between the diffuse reflection layer and the absorptive polarizing layer and having a second transmission axis that is substantially parallel to the first direction;
a plurality of light-emitting devices to emit infrared light onto a surface of the whiteboard film at a viewer's side; and
a plurality of photodetection devices to receive the infrared light emitted from the plurality of light-emitting devices, the plurality of photodetection devices being provided so as to at least partly oppose the plurality of light-emitting devices.

2. The whiteboard film system of claim 1, further comprising a frame provided in a peripheral region of the surface of the whiteboard film, the frame supporting the plurality of light-emitting devices and the plurality of photodetection devices, wherein
regions of the surface of the whiteboard film other than the peripheral region are exposed from the frame.

3. The whiteboard film system of claim 1 or 2, wherein the whiteboard film further comprises a low-refractive index layer being disposed between the diffuse reflection layer and the reflective polarizing layer and having a refractive index that is smaller than a refractive index of the diffuse reflection layer.

4. The whiteboard film system of claim 3, wherein the refractive index of the low-refractive index layer is 1.30 or less.

5. The whiteboard film system of claim 3 or 4, wherein the low-refractive index layer comprises an air layer.

6. The whiteboard film system of any one of claims 3 to 5, wherein the low-refractive index layer comprises a porous layer.

7. A whiteboard system comprising:
a whiteboard including:
a diffuse reflection plate to diffuse-reflect visible light;
an absorptive polarizing layer having a first transmission axis that is parallel to a first direction; and
a reflective polarizing layer being disposed between the diffuse reflection plate and the absorptive polarizing layer and having a second transmission axis that is substantially parallel to the first direction;
a plurality of light-emitting devices to emit infrared light onto a surface of the whiteboard at a viewer's side; and
a plurality of photodetection devices to receive the infrared light emitted from the plurality of light-emitting devices, the plurality of photodetection devices being provided so as to at least partly oppose the plurality of light-emitting devices.

8. The whiteboard system of claim 7, further comprising a frame provided in a peripheral region of the surface of the whiteboard, the frame supporting the plurality of light-emitting devices and the plurality of photodetection devices, wherein
regions of the surface of the whiteboard other than the peripheral region are exposed from the frame.

9. The whiteboard system of claim 7 or 8, wherein the whiteboard further comprises a low-refractive index layer being disposed between the diffuse reflection plate and the reflective polarizing layer and having a refractive index that is smaller than a refractive index of the diffuse reflection plate.

10. The whiteboard system of claim 9, wherein the refractive index of the low-refractive index layer is 1.30 or less.

11. The whiteboard system of claim 9 or 10, wherein the low-refractive index layer comprises an air layer.

12. The whiteboard system of any one of claims 9 to 11, wherein the low-refractive index layer comprises a porous layer.

13. A peeking prevention system comprising:
the whiteboard film system of any one of claims 1 to 6; and
a partition to delimit from the surroundings a space in which information displayed on the whiteboard film is presented, the partition having a light-transmitting portion through which the inside of the space is viewable, wherein
the light-transmitting portion includes a transparent substrate and a polarizing layer, the polarizing layer having a third transmission axis that is orthogonal to the first direction.

14. A peeking prevention system comprising:
the whiteboard system of claim any one of claims 7 to 12; and
a partition to delimit from the surroundings a space in which information displayed on the whiteboard is presented, the partition having a light-transmitting portion through which the inside of the space is viewable, wherein
the light-transmitting portion includes a transparent substrate and a polarizing layer, the polarizing layer having a third transmission axis that is orthogonal to the first direction.
